# EUROPEAN PATENT SPECIFICATION

(11) **EP 3 170 310 B1**
(45) Date of publication and mention of the grant of the patent: **30.01.2019**
(21) Application number: 15745167.5
(22) Date of filing: 16.07.2015
(51) Int. Cl.: H04N 21/2187, H04N 21/4788, H04N 21/61

(54) **SYSTEM AND METHOD FOR STREAMING REAL-TIME VIDEO FROM MOBILE DEVICE TO SET-TOP-BOX CONNECTED WITH IPTV SERVER**
SYSTEM UND VERFAHREN ZUM STREAMING VON ECHTZEIT-VIDEO VON EINER MOBILEN VORRICHTUNG ZU EINER SET-TOP-BOX, DIE MIT EINEM IPTV-SERVER VERBUNDEN IST
SYSTÈME ET PROCÉDÉ POUR DIFFUSER EN CONTINU UNE VIDÉO EN TEMPS RÉEL D'UN DISPOSITIF MOBILE À UN BOÎTIER DÉCODEUR CONNECTÉ AVEC UN SERVEUR IPTV

(30) Priority: 16.07.2014 PT 105724414; 16.07.2014 PT 105723814
(43) Date of publication of application: 24.05.2017
(73) Proprietor: Vodafone IP Licensing Limited, Newbury, Berkshire RG14 2FN (GB); Vodafone Portugal S.A., Lisboa (PT)
(72) Inventor: NUNO MOTA CONSTANTINO, Duarte, London W2 6BY (GB); ISABEL MOREIRA MONTEIRO, Sílvia, London W26BY (GB); MANUEL DA SILVA MARGATO, António, London W2 6BY (GB); MELO QUEIROZ DE AZEVEDO DUARTE, Pedro, London W2 6BY (GB)
(74) Representative: Boult Wade Tennant LLP
(86) International application number: PCT/EP2015/066255
(87) International publication number: WO 2016/008974

(56) References cited:
- WO-A1-01/46818
- WO-A2-2012/166444
- US-A1- 2009 207 905
- US-A1- 2011 285 863
- US-A1- 2012 167 154
- US-A1- 2013 013 698
- US-A1- 2013 286 211
- US-A1- 2014 160 223

## Description

### Technical field

The present disclosure relates to a system and a method for streaming real-time video from a mobile device to a set-top-box connected with an IPTV (internet protocol television) server, in particular a set-top-box connected to a television. Document US-A-2013/013698 discloses a system for sharing media content between users.

### General Description

Described herein is a system and method for streaming live video from a mobile terminal to multiple television set-top-boxes for display on respective televisions. The system and method include upload of live video from the camera of the mobile terminal to a server and forwarding of the live video from the server to the nominated set top boxes. The set top boxes being nominated by the user prior to upload. The step of forwarding the live video stream may include transcoding.

The disclosure may be performed on any appropriate communication device comprising a camera, including but not limited to, smartphones, tablets, laptops, smartwatches, glasses with an optical head-mounted display, and other exemplary devices compatible with a variety of operating systems such as iOS and Android.

Thus, the present disclosure relates to a system and a method for streaming real-time video from a mobile device to a set-top-box (STB) connected with an IPTV (internet protocol television) server, in particular a set-top-box connected to a television.

The system and a method described are able to stream live videos from smartphones or tablets captured in real time by the device camera to a Tv Box (or set-top-box, STB).

The following is an exemplary aspect of the disclosure. Initially, a user opens the app after downloading it by selecting/tapping the respective app icon. The app is loaded and checks which of the native address book the contacts of the device that are also TV customers, preferably but not necessarily, by running the phone number/email addresses on the native address book against a database of TV users that were previously registered/created by the TV customers on the set-top-box itself. The TV STB user is associated with a mobile phone number or an email address.

Preferably but not necessarily, in order to obtain the TV STB users, the mobile device sends the native contacts to a server. This server uses API methods By Msisdn and By Email to get all of these native contacts that are TV STB users.

Preferably but not necessarily, if a client has more than for example 500 contacts, it is sent by mobile phone only the first 500 contacts and the remaining are ignored. This limitation can be included as one of the safety rules to the data of clients.

Preferably but not necessarily, encryption was to enabled for the communication between mobile and server, when syncing contacts, e.g. through an AES128 encrypted token.

The app then shows only the contacts that can be addressed by the service. The app user can stream live videos to any of these contacts shown in the app as the app has already worked in the background to only show the user with the eligible contacts. Further details on the exchange of contacts to determine eligible contacts can be found below.

After selecting one or several contacts to share the live video with, the app initiates its camera and at the same time, preferably but not necessarily, measures the available bandwidth for the available data/internet connection. Preferably, the service adapts the video quality to the available bandwidth by adjusting the video bitrate. The user just needs to tap the screen in order to initiate the live stream to the chosen TV STB contacts. Preferably, the following is carried out in order to evaluate the network to which the mobile is connected, a streaming / uploading of 1.5 seconds (android) and 6 seconds (iPhone), and then calculating the LB (Kb) sent based on a function of time.

The user then starts to stream the live video to the TV STBs. Whatever the user captures on the device camera, it is transmitted live to the TV STBs. The user is also notified in the app of the TV STB users that have accepted to see the live video. The icons become outlined in green. The video is not sent directly from mobile to set-top-box. As the architecture diagram shows it is sent to a video stream server (wowza) where it is remuxed. The STB connects directly to the video stream server to obtain the live stream. The delay introduced by filling the buffer in the video server stream is on average 7 seconds.

When the TV user gets a notification on his STB, the user is notified that someone is trying to share a live video with him. The user may see the video immediately or see it later on a video inbox of the STB. The STB user can also block the sender. As soon as the video is accepted by the STB user, preferably but not necessarily, a video transcoding process is initiated. This process converts/transcodes the original video format captured by the mobile device (e.g. Mpeg4) to a format compatible with the STB, e.g. smoothstreaming. A video stream server (Wowza) is used to do that.

If the TV user was not able to accept the live video on the preceding step, he can watch by accessing the STB video inbox. All the videos the user gets from live streaming on the user's STB are stored on the cloud for a pre-defined duration so that the user can watch and re-watch all the received videos.

The disclosed system and method furthers has the following functionalities: user listing; user authentication; visualizing the details of a video share; managing the video shares (view, remove, block sending user), user configuration (deactivate user service, ignore PIN request when accepting a video share, listing blocked users and unblocking blocked users).

### Brief Description of the Drawings

The following figures provide preferred embodiments for illustrating the description and should not be seen as limiting the scope of invention.
**Figure 1****:** Schematic representation showing the general diagram of an embodiment of the disclosure.
**Figure 2****:** Schematic representation showing the steps of a mobile live sharing to a TV destination, according to an embodiment.
**Figure 3****:** Schematic representation showing the flow of authorization and authentication of the requests done to the app, according to an embodiment.
**Figure 4****:** Schematic representation showing the steps of the request for the initial app page of an embodiment.
**Figure 5****:** Schematic representation showing the steps for the inbox page request of a user, according to an embodiment.
**Figure 6****:** Schematic representation showing the steps of the page request for the details of a video share of an embodiment.
**Figure 7a****-d:** Schematic representation showing the steps of the visualisation of a video share that is ongoing, according to an embodiment.
**Figure 8****:** Schematic representation showing the steps for exiting an ongoing video share of an embodiment of the disclosure.
**Figure 9****:** Schematic representation showing the steps for the playback of video share that has already finished of an embodiment of the disclosure.
**Figure 10****:** Schematic representation showing the flow from the moment a user selects the option to erase a video share of an embodiment of the disclosure.
**Figure 11****:** Schematic representation showing the flow from the moment a user selects the option to block the sender of a video share of an embodiment of the disclosure.
**Figure 12****:** Schematic representation showing the flow from the user selecting the "configuration" item of the main menu until the configuration page is shown according to an embodiment of the disclosure.
**Figure 13****:** Schematic representation showing the flow when the user selects the option of saving the changes in the configuration page of an embodiment of the disclosure.
**Figure 14****:** Schematic representation showing the steps for the request of the list of blocked users of an embodiment of the disclosure.
**Figure 15a****-b:** Schematic representation showing the flow diagram from the moment the user receives notification of a video share of an embodiment of the disclosure.
**Figure 16****:** Schematic representation showing the steps from when the user selects the option to watch later a video share of an embodiment of the disclosure.
**Figure 17****:** Schematic representation showing the app login of an embodiment of the disclosure.
**Figure 18****:** Schematic representation showing the pin insert panel of an embodiment.
**Figure 19****:** Schematic representation showing the user inbox screen of an embodiment.
**Figure 20****:** Schematic representation showing the screen of the page request for the details of a video share of an embodiment.
**Figure 21****:** Schematic representation showing the screen of a visualisation page of a video share that has already finished of an embodiment of the disclosure.
**Figure 22****:** Schematic representation showing the screen of the configurations page of an embodiment of the disclosure.
**Figure 23****:** Schematic representation showing the screen for listing blocked users of an embodiment of the disclosure.
**Figure 24****:** Schematic representation showing the screen of a notification of a new video share of an embodiment of the disclosure.
**Figure 25****:** Schematic representation showing the screen of a help page for the application login of an embodiment of the disclosure.
**Figure 26****:** Schematic representation showing the screen of a help page for the inbox of an embodiment of the disclosure.
**Figure 27****:** Schematic representation showing the screen of a help page for the configuration page of an embodiment of the disclosure.
**Figure 28****:** Schematic representation showing the overall flow diagram according to an embodiment of the disclosure.

### Detailed Description

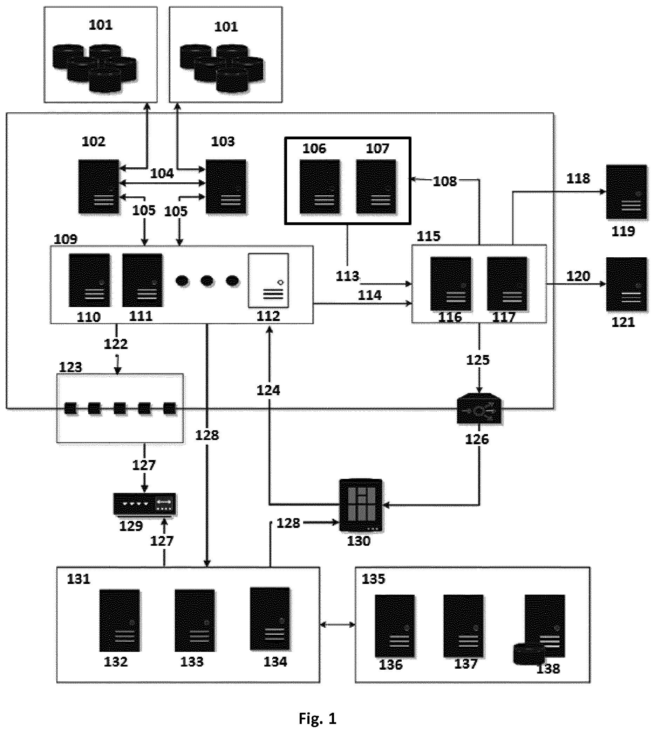

Figure 1 shows a general diagram of the disclosed solution according to an embodiment. The streaming engine ("wowza"), is characterized in that the streaming servers used run a streaming motor and are customized to the platform of the disclosed system and method. Preferably, there are two streaming servers in active status. Each one has a public IP assigned.

Regarding the multi-node manager servers, these servers have the multi-node control function. They are configured by a master-slave cluster. They are responsible for monitoring the streaming servers. If exists excessive load or loss of performance, they create alarms, for example by Voip and/or email.

Regarding storage, the shared videos are saved in storage to future inbox access (via a TV application). It is here that are also saved the thumbnails of shared videos for presenting on the TV application. Regarding the chouchbase servers, this cluster saves the status of streaming servers that Multi-node manager collects. Regarding the frontend-end server, the frontend server is responsible for logical service and management shares. The mobile application communicates with this server to obtain T&C, help text and which of their contacts in mobile are users (msisdn or emails that are registered as a TV client), for example. Regarding the IIS (apps or STB server), the TV application runs here.

In the figure, 101 represents - Amazon Elastic Block Storage (EBS); 102 represents - Storage00; 103 represents - Storage01; 104 represents - Sync; 105 represents - Archive share; 106 represents - Couchbase00; 107 represents - Couchbase01; 108 represents - Machine Instance Info; 109 represents - Wowza Servers; 110 represents - Wowza00; 111 represents - Wonza01; 112 represents - Wonza[N]; 113 represents - Wowza Instance Status; 114 represents - SNMP; 115 represents - Master; 116 represents - Master00; 117 represents - Master01; 118 represents - Email Notifications; 119 represents - SMTP Server; 120 represents - VoiP Notifications; 121 represents - Localphone SIP; 122 represents - Share Content HTTP (Wonza N); 123 represents - Public IP Pool; 124 represents - Share Content RTSP (Wonza N); 125 represents - Mobile Client Requests; 126 represents - Ec2 Load Balancer; 127 represents - HTTP; 128 represents - HTTPS; 129 represents - STB; 130 represents - Mobile Device; 131 represents - Vodafone Front-End; 132 represents - IIS (TV Apps Server); 133 represents - Media Proxy; 134 represents - LiveOn Tv FrontEnd; 135 represents - Vodafone Back-End; 136 represents - Users WS; 137 represents - Authentication WS; 138 represents - Database.

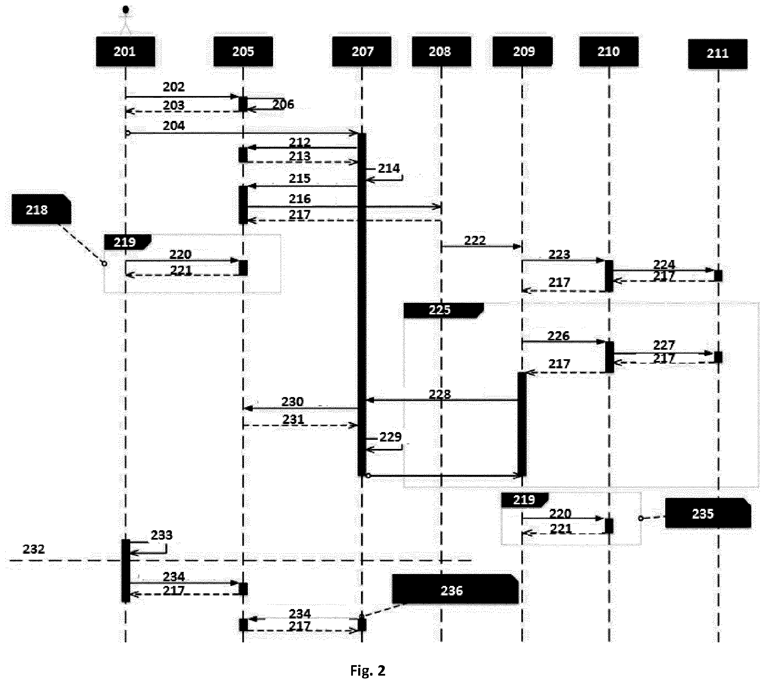

Figure 2 shows the steps of mobile live sharing to a TV destination, according to an embodiment. In the figure, 201 represents - Mobile; 202 represents - Create Share(to); 203 represents - Return(share_id); 204 represents - StartStream(share_id); 205 represents - FrontEnd Service; 206 represents - Create share on DB; 207 represents - Wowza Streaming Server; 208 represents - Mediaroom BackEnd; 209 represents - TV/STB; 210 represents - IIS; 211 represents - FrontEnd Service; 212 represents - PrepareShare(share_id); 213 represents - Return; 214 represents - Wait for stream to become ready; 215 represents - UpdateShareState(READY); 216 represents - SendNotifications(accounts[]); 217 represents - Return(OK); 218 represents - Verifies the recipients currently watching the share; 219 represents - Loop; 220 represents - GetShareState(share_id); 221 represents - Return(share_state); 222 represents - Notify; 223 represents - OpenNotification; 224 represents - GetShare(share_id); 225 represents - User Selects to View Share; 226 represents - PlayShare(share_id); 227 represents - UpdateShare(share_id. VIEWING); 228 represents - GetVideoStream(share_id, user_id); 229 represents - Validate share target; 230 represents - GetShareTargets(share_id); 231 represents - ShareTarget[]; 232 represents - Upload Video Stream is closed; 233 represents - Stop share; 234 represents - UpdateShareState(FINISHED); 235 represents - Verifies the share state for early-detection of stream termination; 236 represents - At this point, Wowza input buffers empty and the share is considered terminated.

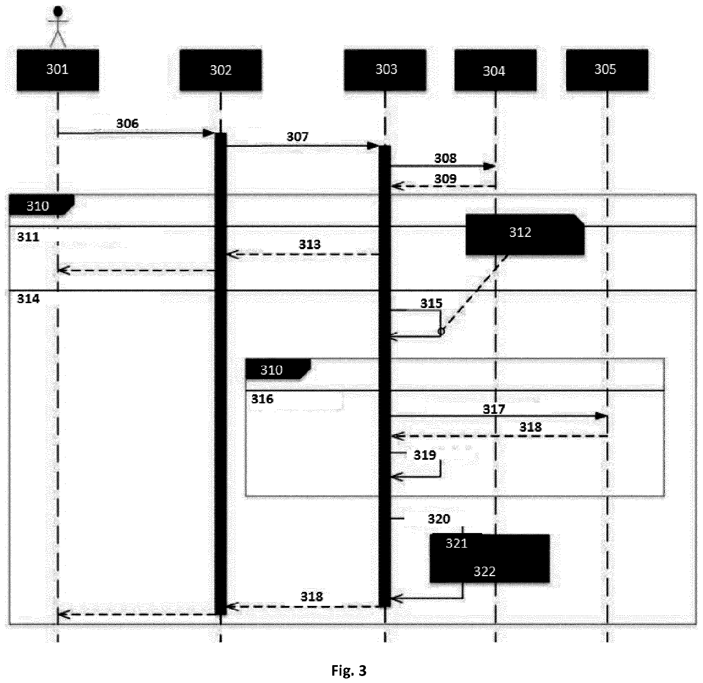

Figure 3 shows the flow of authorization and authentication of the requests done to the app, according to an embodiment. In the figure, 301 represents - User; 302 represents - STB; 303 represents - IIS Frontend; 304 represents - Mediaroom BackEnd; 305 represents - AuthenticationWS; 306 represents - Application Request; 307 represents - RequestPage(GUID); 308 represents - GetAccount(GUID); 309 represents - IPTV Account; 310 represents - alt; 311 represents - [No IPTV Account returned]; 312 represents - In-memory cached session that stores Device/Account/User information; 313 represents - Error; 314 represents - [IPTV Account returned]; 315 represents - Get "Session"; 316 represents - [Session does not exist]; 317 represents - getAuthenticatedUser(GUID); 318 represents - Result; 319 represents - Create "Session"; 320 represents - Process request; 321 represents - ref; 322 represents - Request flow.

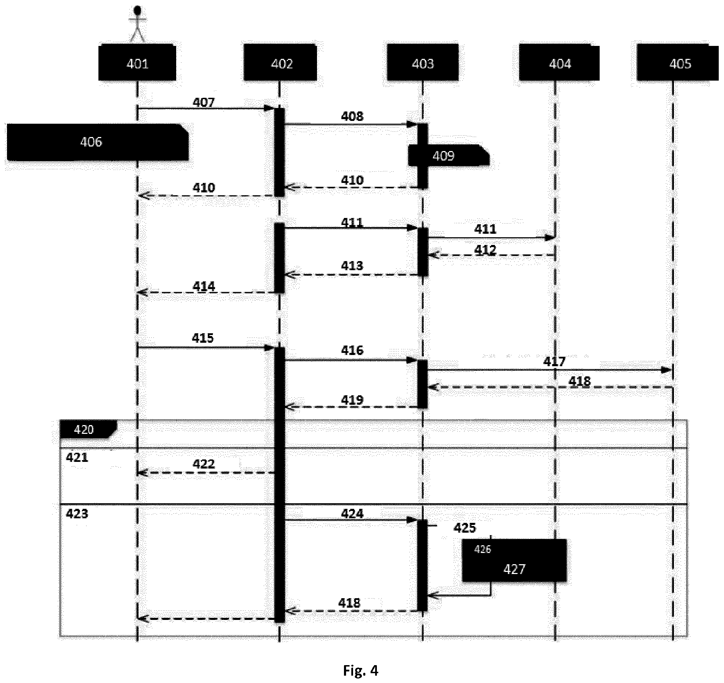

Figure 4 shows the request for the initial app page of an embodiment according to an embodiment. In the figure, 401 represents - User; 402 represents - STB; 403 represents - IIS Frontend; 404 represents - UserWS; 405 represents - AuthenticationWS; 406 represents - The user is always prompted for login when entering the app for the first time; 407 represents - Initial Applcation Request; 408 represents - Page request(GUID); 409 represents - first access detected; 410 represents - Users list page; 411 represents - Get Users(Account); 412 represents - Users list for Accoun; 413 represents - XML Users list; 414 represents - Users list; 415 represents - Login; 416 represents - DoLogin (Account, User); 417 represents - Authenticate User (Account, User); 418 represents - Result; 419 represents - XML Result; 420 represents - alt; 421 represents - [Login failed]; 422 represents - Show error; 423 represents - [Login success]; 424 represents - Open Request Page; 425 represents - Process request; 426 represents - ref; 427 represents - Request flow.

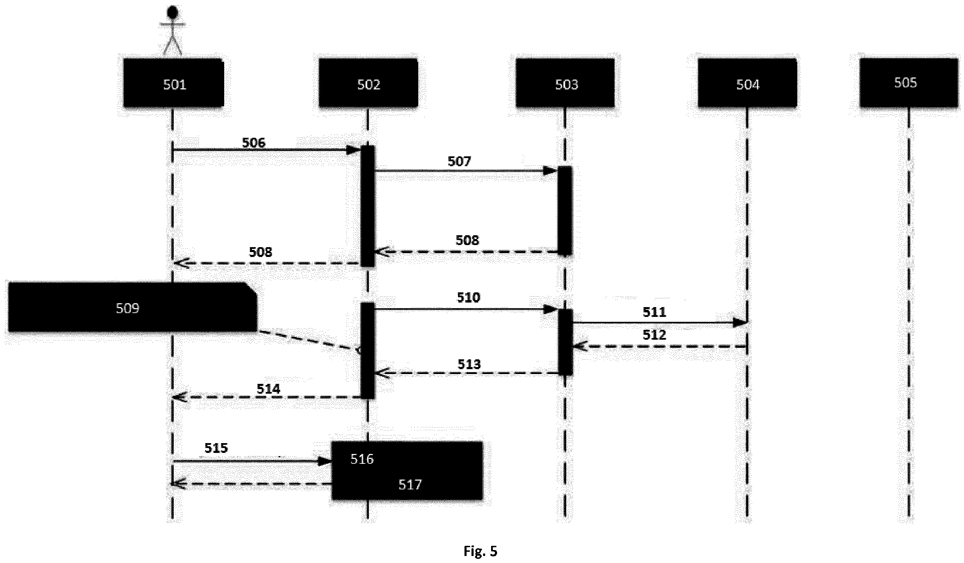

Figure 5 shows the inbox page request of a user, according to an embodiment. It shows the disclosed system and method flow from when the user is authenticated in the application, or selects an already authenticated user, until the inbox page is shown. After authentication or selecting an already authenticated user, the user is directed to the user inbox. The inbox list all video shares that have been made by other users with the current user. Each share is identified by name of user making the shared video, date of the shared video, indication whether the video share has been visualised or not, indication whether the video share is ongoing at the moment (live). The disclosed system and method user also has the possibility of visualising the details of each video share.

In the figure, 501 represents - User; 502 represents - STB; 503 represents - IIS Frontend; 504 represents - Database; 505 represents - AuthenticationWS; 506 represents - Open Inbox; 507 represents - Inbox page request(GUID); 508 represents - Inbox page; 509 represents - The Inbox list is paginated so this request will repeat for as many pages available in the User Inbox; 510 represents - Get Inbox Entries(User); 511 represents - Getlnbox (User); 512 represents - Shares list; 513 represents - XML Shares List; 514 represents - Inbox List; 515 represents - Select Inbox entry; 516 represents - ref; 517 represents - Share details.

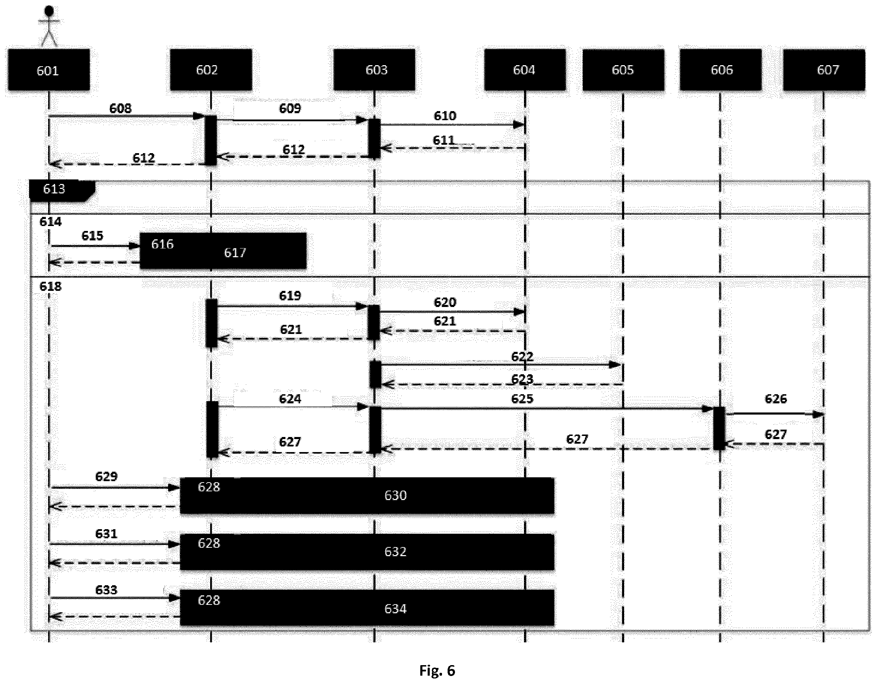

Figure 6 shows the page request for the details of a video share according to an embodiment. If a video share is ongoing, it is shown right away. Otherwise, the detail page of the video share is shown, including name and image of the senders, date of the video share, thumbnail and duration of the video share. In the figure, 601 represents - User; 602 represents - STB; 603 represents - IIS Frontend; 604 represents - Database; 605 represents - Node Manager; 606 represents - Mediaproxy; 607 represents - Wowza; 608 represents - Select inbox entry; 609 represents - Share detail page request (share id, user id); 610 represents - Get share (share id, user id); 611 represents - Share; 612 represents - Share detail page; 613 represents - alt; 614 represents - [share state is ready]; 615 represents - Play live share; 616 represents - ref; 617 represents - Play Live Share; 618 represents - [else]; 619 represents - Request sender user photo; 620 represents - Get Client Photo (id); 621 represents - Sender user photo; 622 represents - Request node; 623 represents - Node; 624 represents - Request thumbnail share; 625 represents - Get share thumbnail (share id, node); 626 represents - Request share thumbnail; 627 represents - Share thumbnail; 628 represents - ref; 629 represents - Play share (share id, user id); 630 represents - Play VOD share; 631 represents - Delete share (inbox entry id); 632 represents - Delete share; 633 represents - Block sender (user id, client id); 634 represents - Block sender.

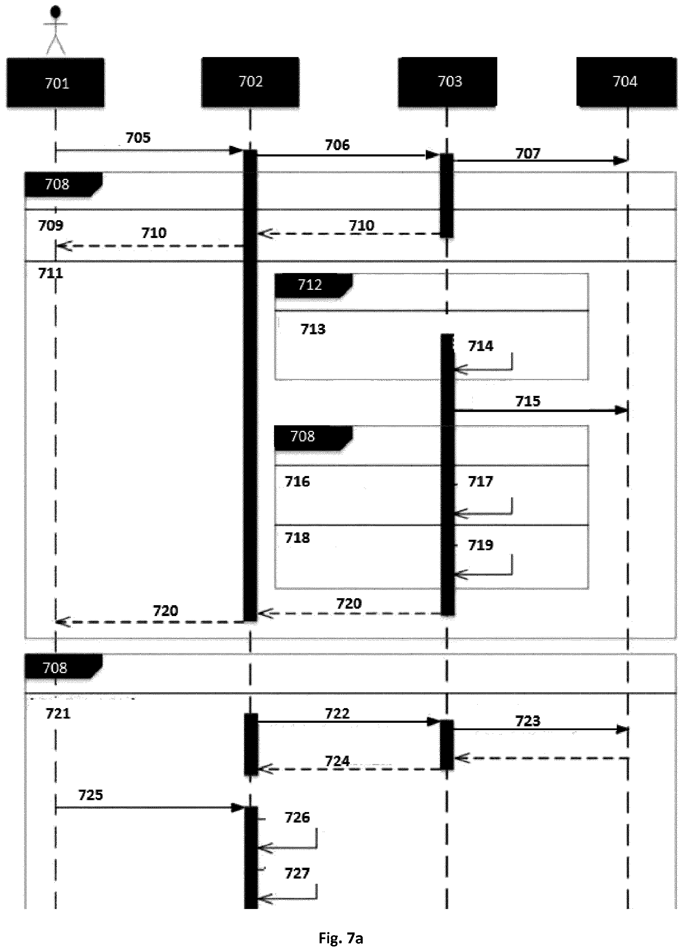

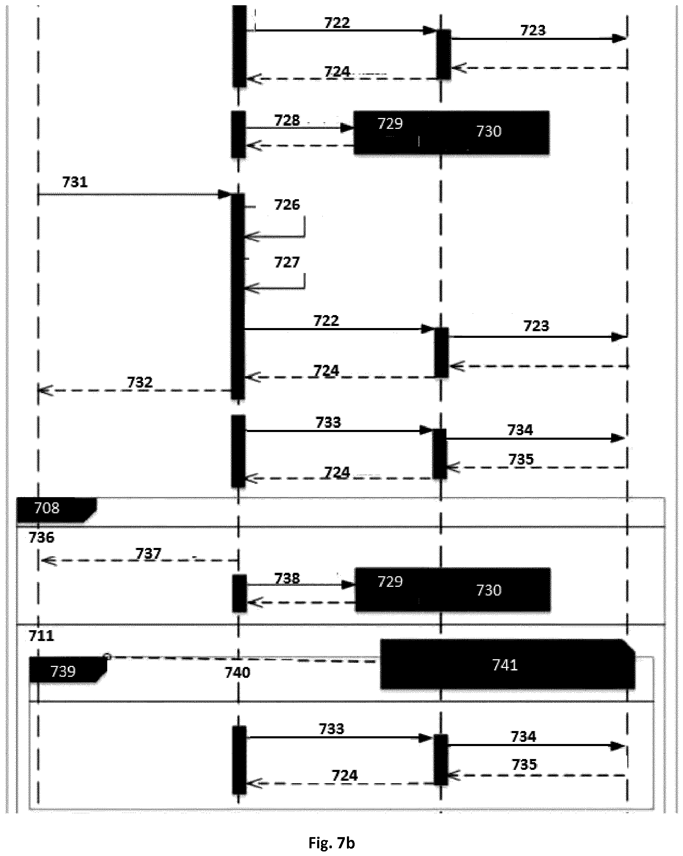

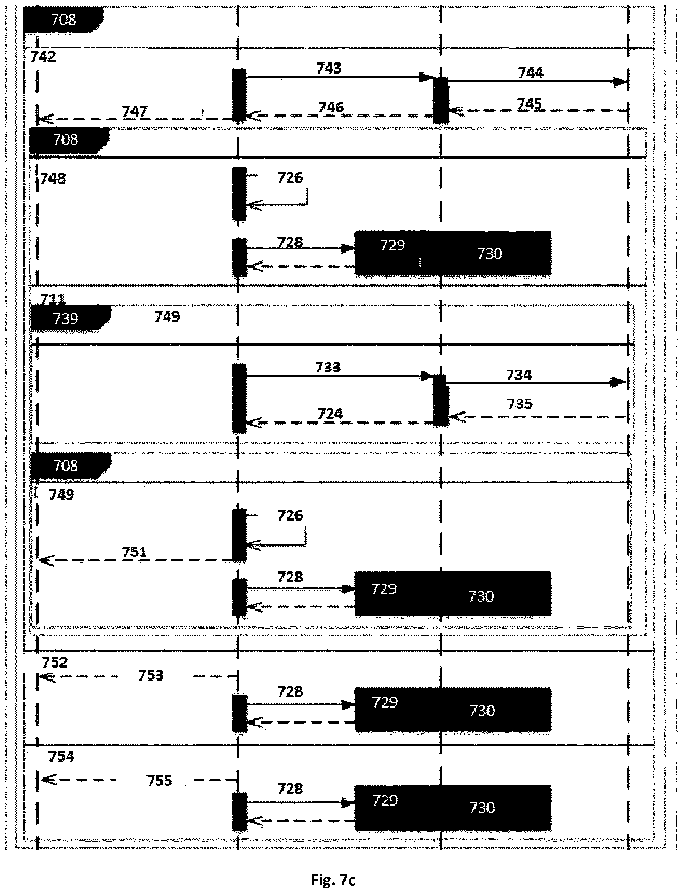

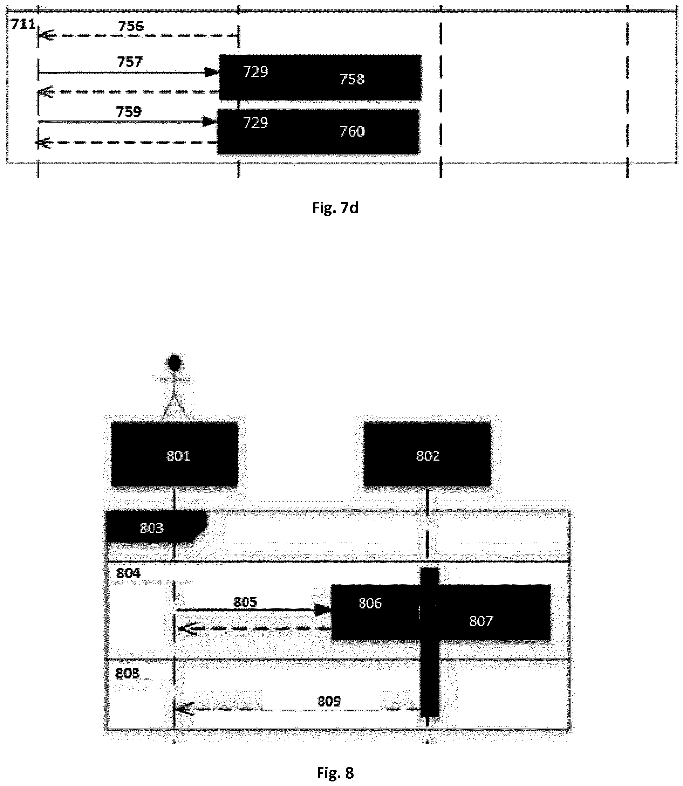

Figure 7 shows the visualisation of a video share that is ongoing according to an embodiment.

In the figure, 701 represents - User; 702 represents - STB; 703 represents - IIS Frontend; 704 represents - Database; 705 represents - Play Live Share; 706 represents - Live share page request (share id, user id); 707 represents - Get share For User (share id, user id); 708 represents - alt; 709 represents - [share is null]; 710 represents - Message Widget page; 711 represents - [else]; 712 represents - opt; 713 represents - [share state = Finished or share state = Expired]; 714 represents - Set isShare Finished = true; 715 represents - Set Inbox entry as viewed (share id, used id, true); 716 represents - [share type = VOD]; 717 represents - Set playback URL = VOD; 718 represents - [share type = Live]; 719 represents - Set playback URL = Live; 720 represents - Live player page; 721 represents - [isShare Finished = false]; 722 represents - Update share view state request (share id, user id, connected); 723 represents - Set Share View State (share id, user id, connected); 724 represents - XML : Result; 725 represents - Press "back" button; 726 represents - Stop video playback; 727 represents - Tune previous channel; 728 represents - Handle back player; 729 represents - ref; 730 represents - Back live player; 731 represents - Press "exit" button; 732 represents - Exit to TV; 733 represents - Request share state (share id); 734 represents - Get share state (share id); 735 represents - Share State; 736 represents - [invalid state]; 737 represents - Show error message; 738 represents - Handle back player; 739 represents - loop; 740 represents - [state is unknown or state is pending]; 741 represents - The loop will execute when a timeout is met and the state is unknown or pending; 742 represents - [state = ready]; 743 represents - Request initiate video playback (share id, user id); 744 represents - Get share For User (share id, user id); 745 represents - Share; 746 represents - String: Content; 747 represents - Initiate playback video; 748 represents - [playback error]; 749 represents - [playback video running]; 750 represents - [playback video stopped]; 751 represents - Show share terminated message; 752 represents - [state = finished]; 753 represents - Show video finish message; 754 represents - [state = expired]; 755 represents - Show share expired message; 756 represents - Panel options; 757 represents - Press "Start Watching" button; 758 represents - Play VOD Share; 759 represents - Press "Close" button; 760 represents - Back live player.

Figure 8 shows exiting an ongoing video share according to an embodiment. In the figure, 801 represents - User; 802 represents - STB; 803 represents - Alt; 804 represents - [referrer = "inbox"]; 805 represents - Open inbox; 806 represents - ref; 807 represents - Inbox; 808 represents - [else]; 809 represents - Previous page.

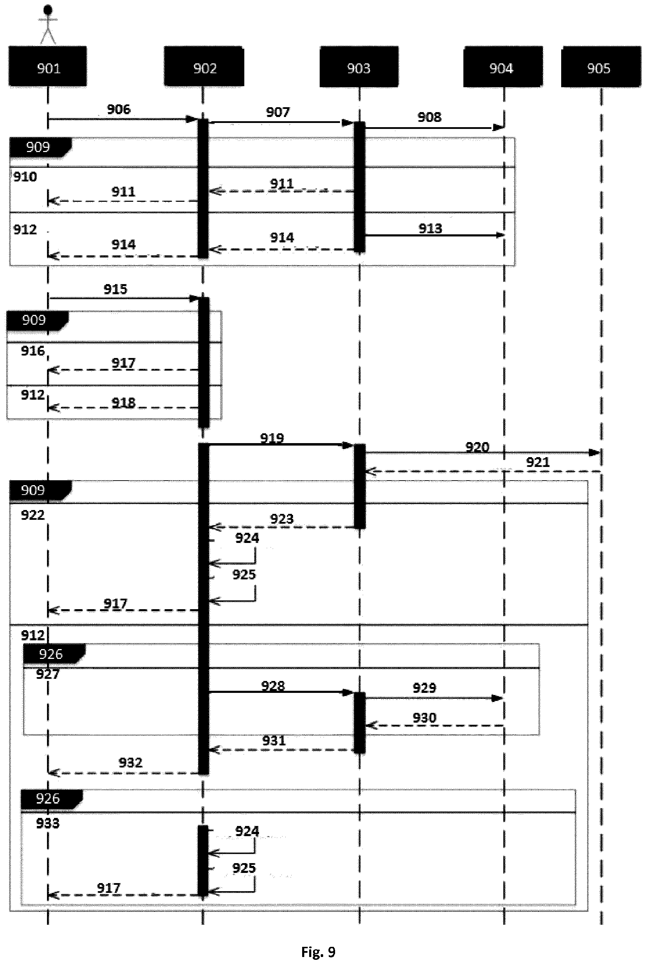

Figure 9 shows the playback of video share that has already finished according to an embodiment. In the figure, 901 represents - User; 902 represents - STB; 903 represents - IIS Frontend; 904 represents - Database; 905 represents - Node manager; 906 represents - Play VOD Share; 907 represents - Live share page request (share id, user id); 908 represents - Get share for User (share id, user id); 909 represents - alt; 910 represents - [share state is not finished]; 911 represents - Message Widget page; 912 represents - [else]; 913 represents - Set Inbox entry as viewed (share id, user id, true); 914 represents - VOD player page; 915 represents - Press "back" button; 916 represents - [referrer is not null or referer = "inbox"]; 917 represents - Previous page; 918 represents - Exit to TV; 919 represents - Request initiate video playback (share id, user id); 920 represents - Request node; 921 represents - Node; 922 represents - [Node is null]; 923 represents - HTTP Status Code: Result; 924 represents - Stop video playback; 925 represents - Tune previous channel; 926 represents - opt; 927 represents - [share state is Live]; 928 represents - Request start time off set (share id); 929 represents - Get Start Time Offset (share id); 930 represents - Start time off set; 931 represents - String: Content; 932 represents - Initiate playback video; 933 represents - [playback video stopped].

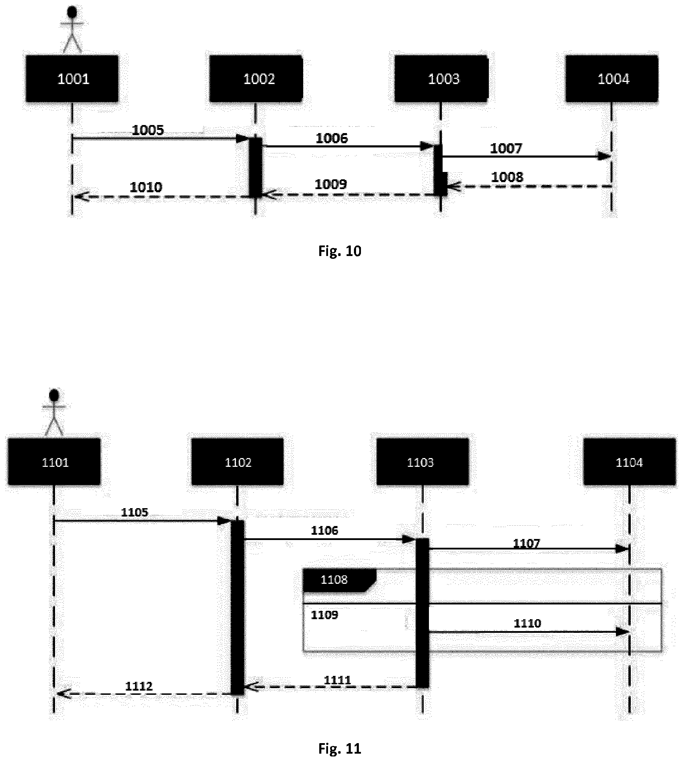

Figure 10 shows the flow from the moment a user selects the option to erase a video share according to an embodiment. In the figure, 1001 represents - User; 1002 represents - STB; 1003 represents - IIS Frontend; 1004 represents - Database; 1005 represents - Delete share from inbox; 1006 represents - Delete share request (inbox entry id); 1007 represents - Delete inbox item (inbox entry id); 1008 represents - Result delete inbox item; 1009 represents - XML: Result; 1010 represents - Show message.

Figure 11 shows the flow from the moment a user selects the option to block the sender of a video share according to an embodiment. In the figure, 1101 represents - User; 1102 represents - STB; 1103 represents - IIS Frontend; 1104 represents - Database; 1105 represents - Block sender; 1106 represents - Block sender request (user id, client id, delete inbox); 1107 represents - Add To BlackList (user id, client id); 1108 represents - opt; 1109 represents - [delete inbox = delete]; 1110 represents - Delete Inbox Item Client (user id, client id); 1111 represents - XML: Result; 1112 represents - Show Message.

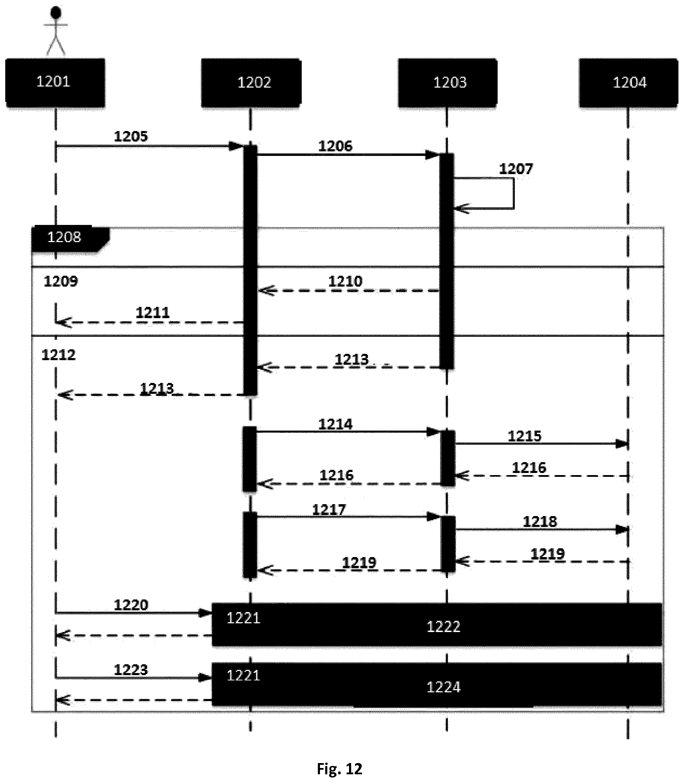

Figure 12 shows the flow from the user selecting the "configuration" item of the main menu until the configuration page is shown according to an embodiment. In the figure, 1201 represents - User; 1202 represents - STB; 1203 represents - IIS Frontend; 1204 represents - Database; 1205 represents - Open settings ; 1206 represents - Settings page request; 1207 represents - Get "Session"; 1208 represents - alt; 1209 represents - [session or user does not exist]; 1210 represents - Redirect to login page; 1211 represents - Login page; 1212 represents - [else]; 1213 represents - Setting page; 1214 represents - Request user preferences; 1215 represents - Get User Preferences (user id); 1216 represents - User preferences; 1217 represents - Request user blachlist; 1218 represents - Get Service BlackList (user id); 1219 represents - User blacklist; 1220 represents - Show blacklist page (user id); 1221 represents - ref; 1222 represents - Show user blacklist; 1223 represents - Save Settings (user id); 1224 represents - Save settings.

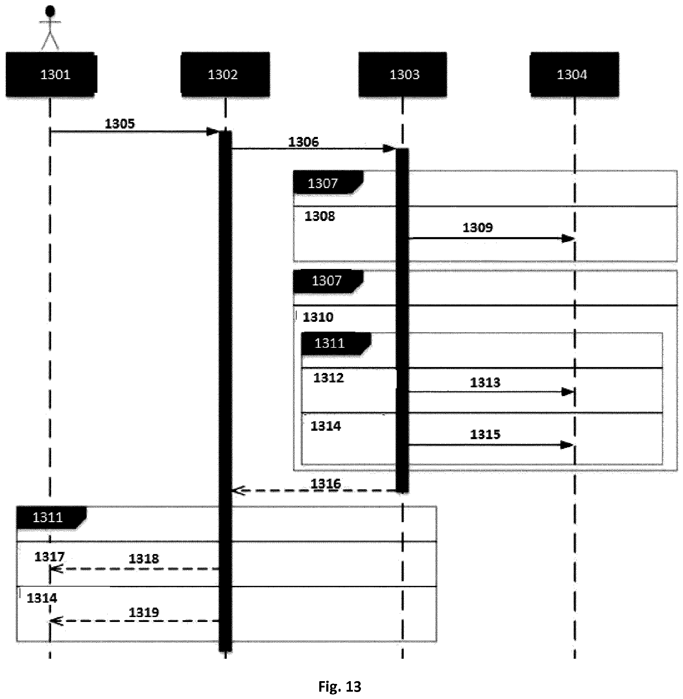

Figure 13 shows the flow when the user selects the option of saving the changes in the configuration page according to an embodiment. In the figure, 1301 represents - User; 1302 represents - STB; 1303 represents - IIS Frontend; 1304 represents - Database; 1305 represents - Save user settings; 1306 represents - Save settings request (user id); 1307 represents - opt; 1308 represents - [disable pin not null]; 1309 represents - Update user preferences (user id, disable pin); 1310 represents - [disable service not null]; 1311 represents - alt; 1312 represents - [disable service = "on"]; 1313 represents - Block Service (user id); 1314 represents - [disable service = ""]; 1315 represents - UnBlock Service (user id); 1316 represents - XML : Result; 1317 represents - [success response]; 1318 represents - Exit to TV; 1319 represents - Show error message.

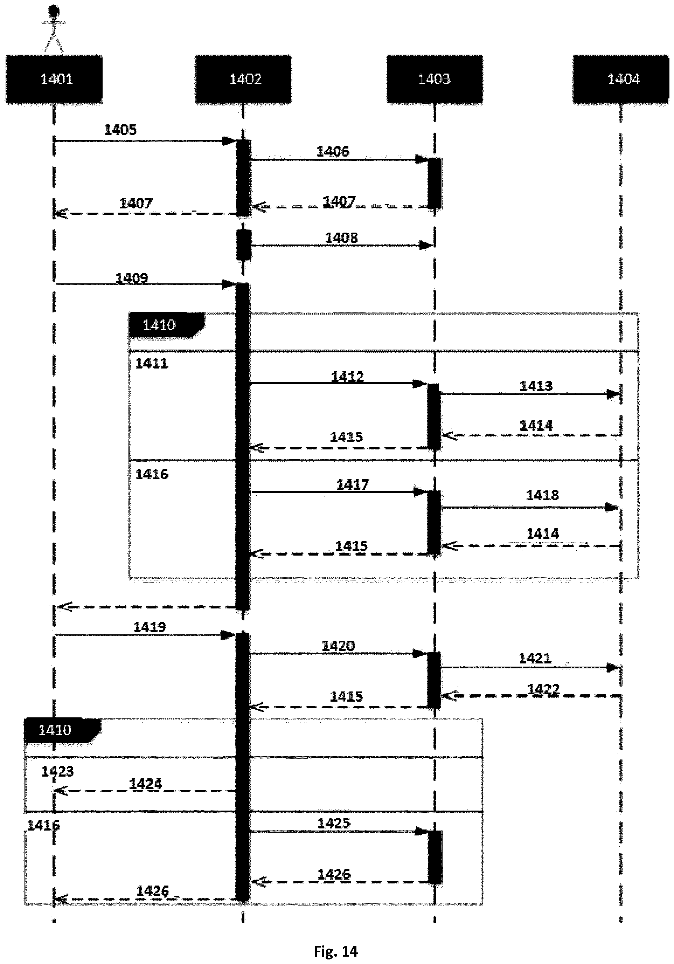

Figure 14 shows the request for the list of blocked users according to an embodiment. In the figure, 1401 represents - User; 1402 represents - STB; 1403 represents - IIS Frontend; 1404 represents - Database; 1405 represents - Show blacklist user; 1406 represents - Blacklist user page request (user id); 1407 represents - Blacklist user page; 1408 represents - Update blacklist entries (user id); 1409 represents - Select entry; 1410 represents - alt; 1411 represents - [entry = "checked"]; 1412 represents - Add user to blacklist request (user id, mark add); 1413 represents - Update BlackList (user id, true); 1414 represents - Result update entry; 1415 represents - XML : Result; 1416 represents - [else]; 1417 represents - Remove user from blacklist request (user id, mark remove); 1418 represents - Update BlackList (user id, false); 1419 represents - Save changes; 1420 represents - Request commit changes (user id); 1421 represents - Commit BlackList (user id); 1422 represents - Result update blacklist; 1423 represents - [error occurred]; 1424 represents - Show message; 1425 represents - Request back page; 1426 represents - Back page.

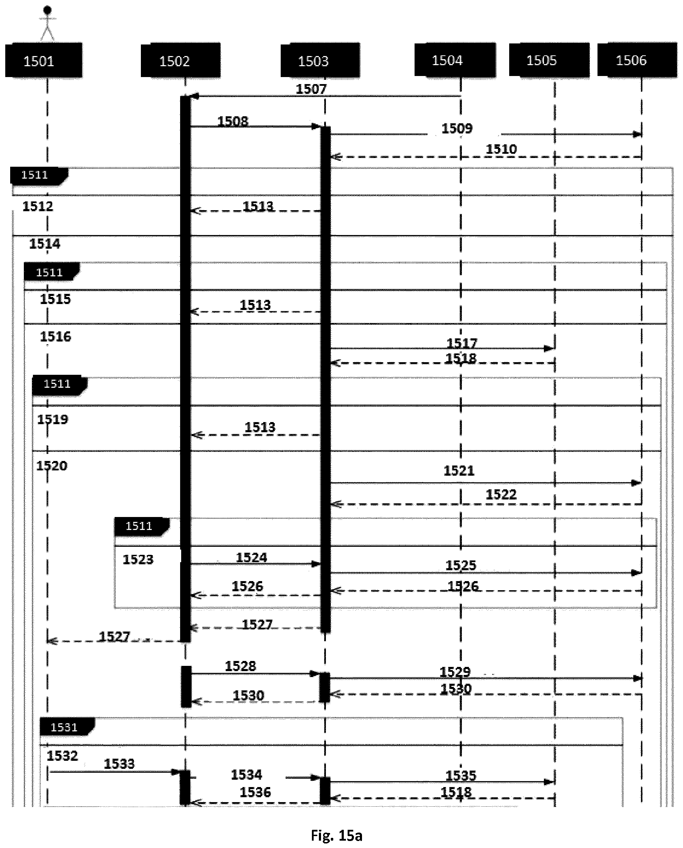

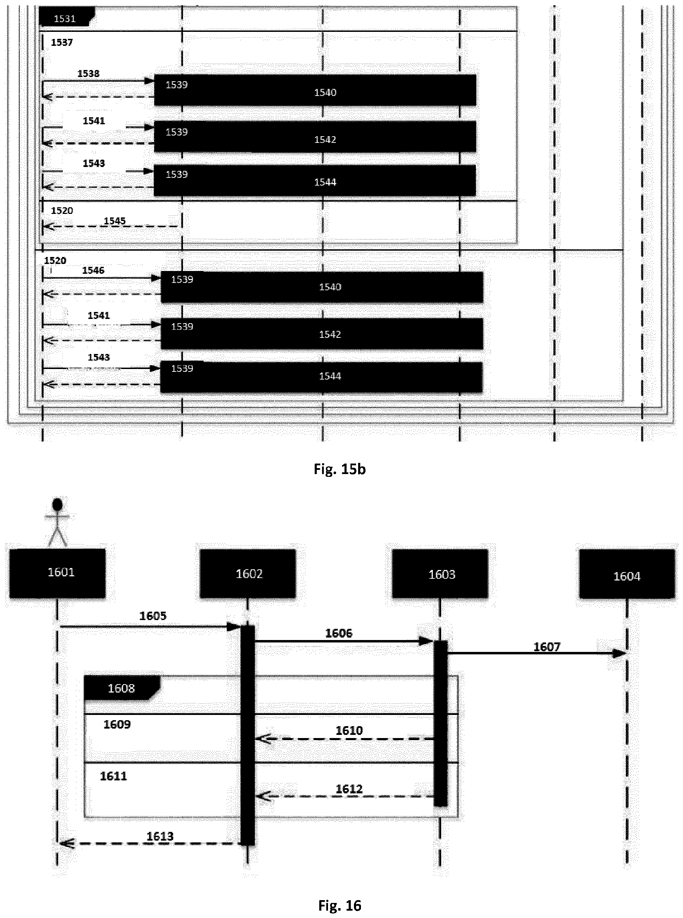

Figure 15a-b shows the flow from the moment the user receives notification of a video share according to an embodiment. In the figure, 1501 represents - User; 1502 represents - STB; 1503 represents - IIS Frontend; 1504 represents - Mediaroom BackEnd; 1505 represents - UserWS; 1506 represents - Database; 1507 represents - Notification: Open notification page; 1508 represents - Request notification page; 1509 represents - Get share for account (share id, account id); 1510 represents - Return Share result; 1511 represents - opt; 1512 represents - [No Share]; 1513 represents - Empty result; 1514 represents - [Share available]; 1515 represents - [Share state is Finished or Expired]; 1516 represents - [Share state is Ready]; 1517 represents - Get User (user id, GUID); 1518 represents - Return user; 1519 represents - [User is null or incorrect account]; 1520 represents - [else]; 1521 represents - Get sender user (client id); 1522 represents - Return sender user; 1523 represents - [User has pin]; 1524 represents - Request user preferences; 1525 represents - Get User Preferences (user id); 1526 represents - User preferences; 1527 represents - Notification page; 1528 represents - Request sender user photo; 1529 represents - Get Client Photo (ida); 1530 represents - Sender user photo; 1531 represents - alt; 1532 represents - [User needs to enter pin]; 1533 represents - User enter PIN; 1534 represents - Request validate user pin (user id, pin); 1535 represents - Get User (user id, GUID); 1536 represents - XML : Request; 1537 represents - [User exists and pin validation is successful]; 1538 represents - Play share (share id, user id); 1539 represents - ref; 1540 represents - Play Live Share; 1541 represents - Set share state (share id, user id); 1542 represents - See later; 1543 represents - Block sender (user id, client id); 1544 represents - Block sender; 1545 represents - Show error message; 1546 represents - Play share (share id, user id).

Figure 16 shows the steps from when the user selects the option to watch later a video share, according to an embodiment. In the figure, 1601 represents - User; 1602 represents - STB; 1603 represents - IIS Frontend; 1604 represents - Database; 1605 represents - Watch share later; 1606 represents - Request set share state (share id, user id, state rejected); 1607 represents - Set share state (share id, user id, state rejected); 1608 represents - alt; 1609 represents - [Set share successful]; 1610 represents - XML: Result; 1611 represents - [else]; 1612 represents - Empty result; 1613 represents - Exit.

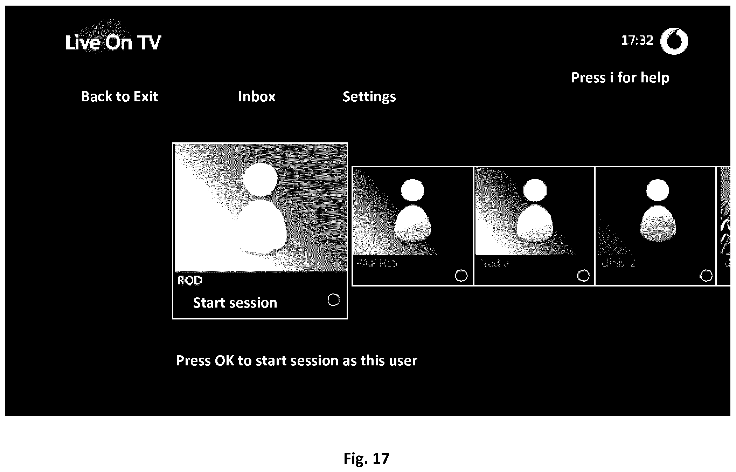

Figure 17 shows the app login according to an embodiment. After the application is initiated, the initial page is shown with the identified user list by their name and respective authentication status. In case a user wishes to login and being necessary to enter the respective PIN, a panel is shown such that the user may enter the PIN and authenticate with the application.

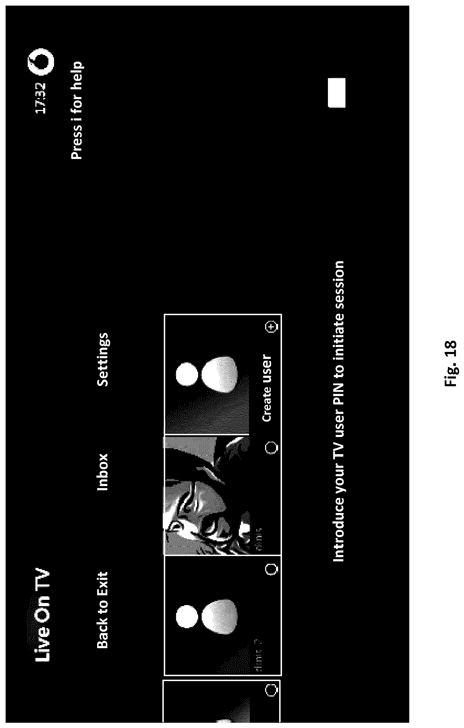

Figure 18 shows the pin insert panel according to an embodiment.

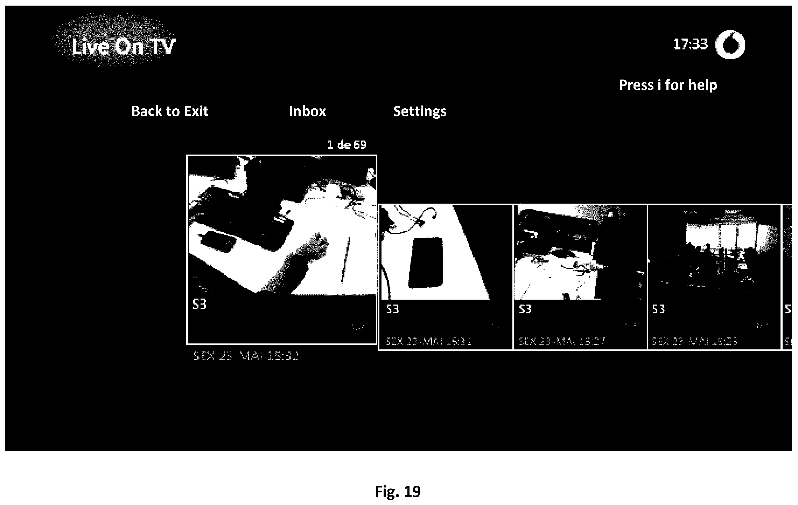

Figure 19 shows the user inbox screen according to an embodiment. It is shown to the authenticated user the user inbox with the listing of all she video shares made by other users. It is also shown the index of the selected video share, as well as the total number of video shares.

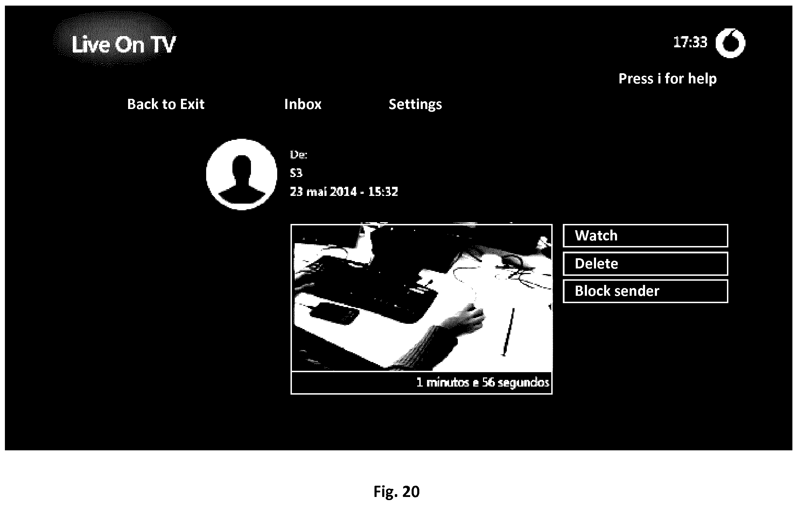

Figure 20 shows the screen of the page request for the details of a video share according to an embodiment.

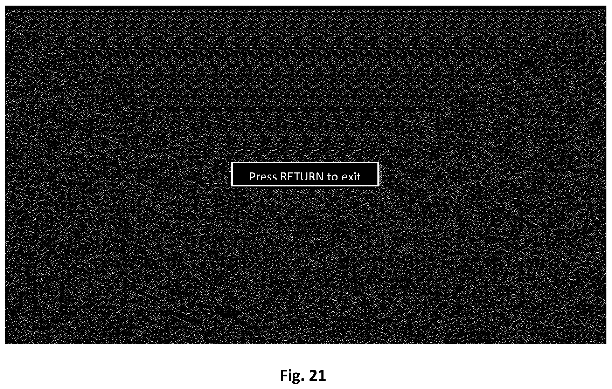

Figure 21 shows the screen of a visualisation page of a video share that has already finished according to an embodiment.

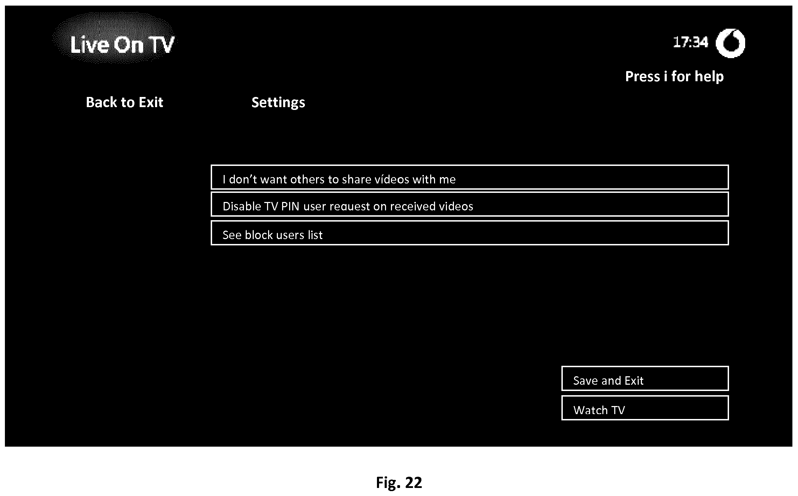

Figure 22 shows the screen of the configurations page according to an embodiment.

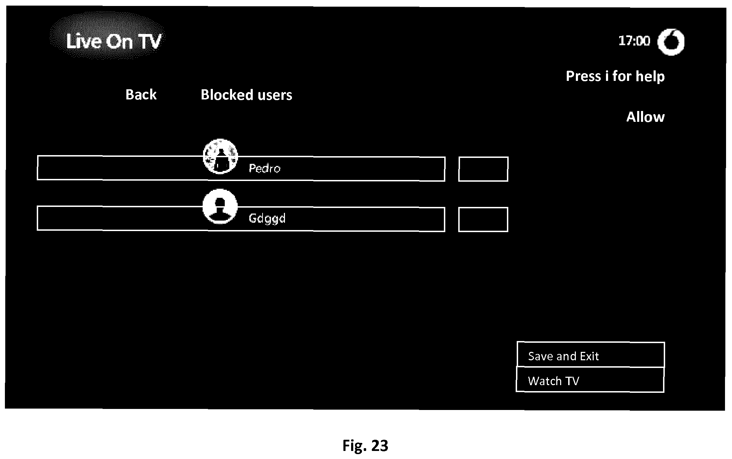

Figure 23 shows the screen for listing blocked users according to an embodiment.

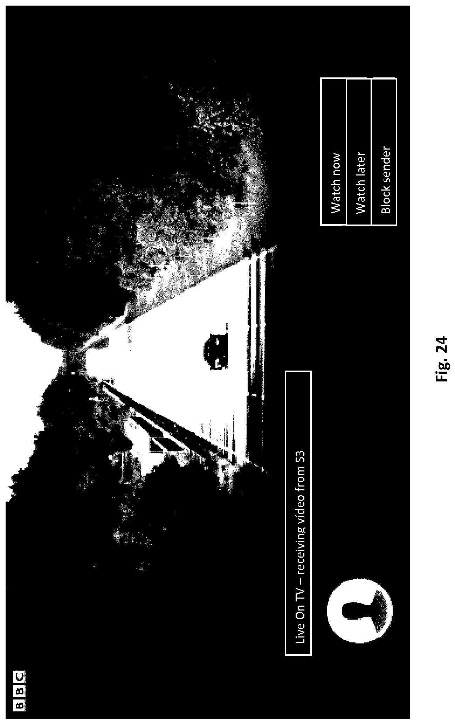

Figure 24 shows the screen of a notification of a new video share according to an embodiment.

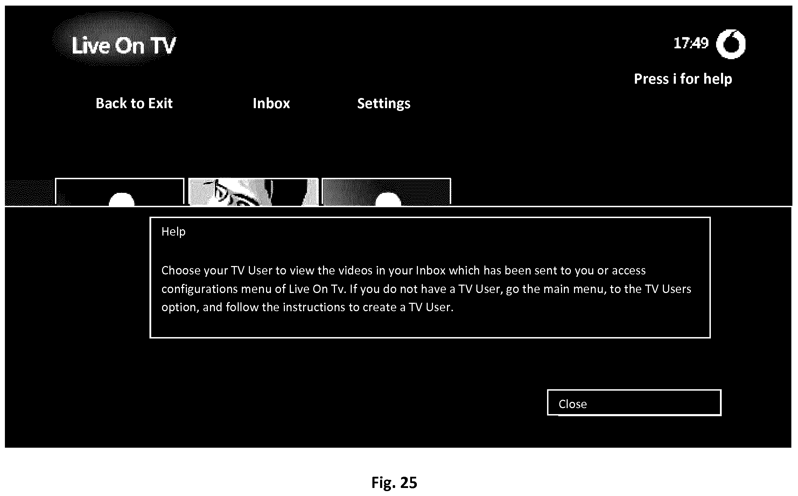

Figure 25 shows the screen of a help page for the application login according to an embodiment.

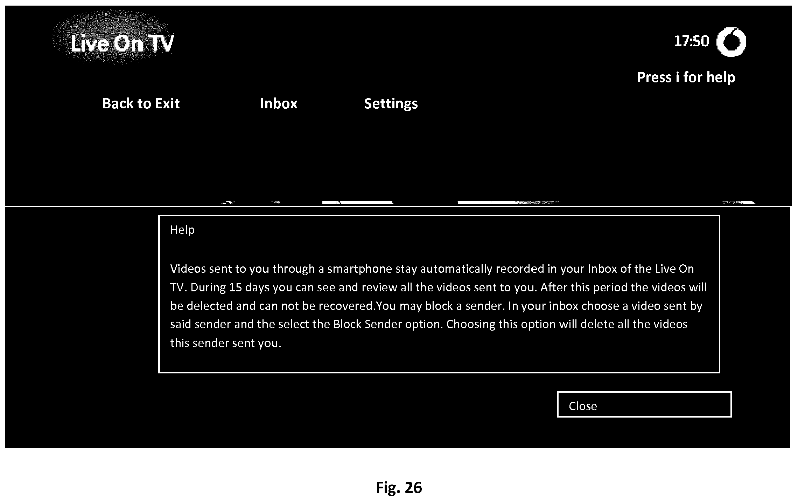

Figure 26 shows the screen of a help page for the inbox according to an embodiment.

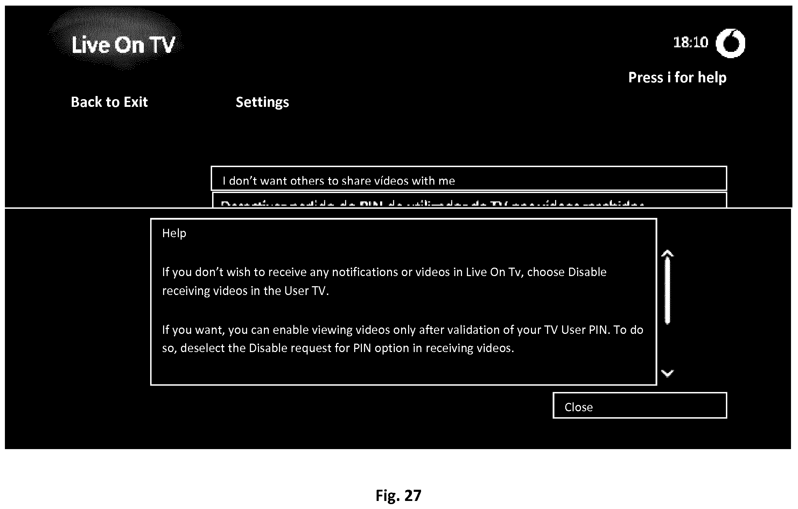

Figure 27 shows the screen of a help page for the configuration page according to an embodiment.

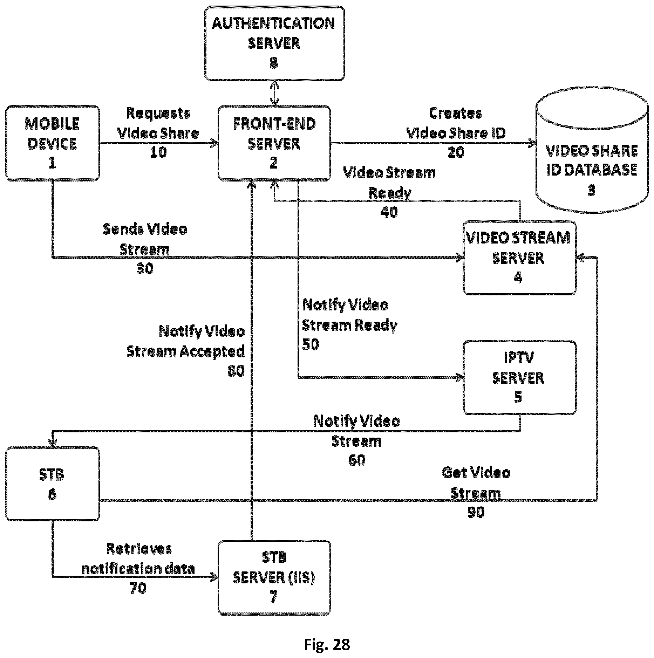

Figure 28 shows the overall flow diagram according to an embodiment. The mobile user may use an app or other similar interface at a mobile device or terminal. The mobile device 1 requests to video share 10 from the front-end server 2. The front-end server 2 is able to communicate with an authentication server 8 in order to verify user authorisation and also to correlate each STB with the respective associated users, as each STB may be associated with more than one user (for example, in the case of a family). It is also the responsibility of the front-end server 2 to create a video share ID 20 and to store it in a video share ID database 3. The mobile device 1 initiates sending the video stream 30 that the user of the mobile device wishes to share, to the video stream server 4. When the video stream is ready, the video stream server 4, the front-end server 2 that the video stream is ready 40. Only then does the front-end server notify the IPTV server 5 with the notification that the video stream is ready 50. The IPTV server 5 notifies the availability of a video stream 60 to the set-top-box (STB) 6. The set-top-box (STB) 6 retrieves the data on the received notification 70 from the STB server 7 (e.g. an IIS server). If the user accepts the video stream to be shared, the STB 6 sends acceptance to the STB server 7 which then sends notification that the video share stream has been accepted 80 to the front-end server 2. The STB 6 also gets the video stream 90 from the video stream server 4 which initiates the streaming to the STB 6, until the video share is over or the STB 6 user chooses to terminate it. Preferably, the front-end server 2 is configured for continuously updating the mobile device 1 with the status of the system and of the video being shared. Also preferably, the STB server 7 is configured for continuously updating the STB 6 with the status of the system and of the video being shared.

The embodiments of the disclosure have advantages namely that the different technologies of the IPTV server 5 and the video stream server 4 can be easily integrated. Furthermore, the STB 6 is only notified when the video stream is ready to be streamed by the video stream server 4, thus making the transition of the STB 6 from IPTV to the video streaming very fast and practically seamless. Most of the preparation required by the video stream server 4 is buffering of the video stream, as is usual in the art, such that playback interruptions of the video stream are minimized and network connection issues are mitigated. This is particularly interesting because the network connection most likely to have larger latencies and speed variations is the network of the mobile device 1, which is the network being buffered by the video stream server 4 until the STB 6 is notified. As the STB user only receives the notification when the video stream is ready to be streamed by the video stream server 4, the STB user hardly has to wait between watching TV, accepting the video stream share, and watching the video stream share.

The embodiments of the disclosure have advantages namely that by separating at the STB 6 the actual notification from the data details of said notification, the IPTV server 5 can be used to display a simple notification while the more complicated interaction is assured by a different device. This way, the user does not need to be interrupted in watching TV, as the notification is shown by the IPTV server 5, and can also switch very quickly to the video stream. This is for the reason that the IPTV server 5 is able to allow the user to navigate to said especially built URL of the STB server 7, while the STB server 7 is able to subsequently furnish the specific data and actions regarding the video stream which has been requested to be shared to the STB 6.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams do not depict any particular means, rather the flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the invention as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The above described embodiments are combinable. The following claims further set out particular embodiments of the disclosure.

## Claims

1. System for the real-time sending of a video stream from a mobile device to a set-top-box STB connected with an IPTV server, said system comprising:
an IPTV server for serving TV to the STB which is connected with said IPTV server;
a front-end server for serving the mobile device;
a video stream server for serving in real-time the video stream to the STB;
wherein the front-end server is configured to:
receive a request for sharing a video stream from the mobile device;
receive a confirmation from the video stream server that the video stream being sent from the mobile device to said video stream server is ready to be streamed to the STB;
send a notification to the IPTV server that a request for sharing a video stream has been made, such that the IPTV server will display said notification through the STB and will give the STB user the choice to open an especially built URL for receiving the video stream being shared by the mobile device.

2. System according to the previous claim comprising:
an STB server for serving the STB;
wherein the STB server is configured to:
serve, to the STB, data of the notification that a request for sharing a video stream has been made, when the STB user chooses to open said especially built URL;
receive confirmation from a user of the STB that the video stream has been accepted;
notify the front-end server that the video stream has been accepted;
serve, to the STB, the address of the video stream at the video stream server.

3. System according to any of the previous claims comprising:
an authentication server for authenticating the users of the system and for correlating each user with each STB;
wherein the front-end server is configured to request from the authentication server the identification of the STB correlated with the destination user being sought for the sending of a video stream.

4. System according to any of the previous claims comprising:
a database for storing the IDs of the video streams to be shared;
wherein the front-end server is configured to create a video share ID for each request received from a mobile device and to store said video share ID in the database;
wherein the front-end server and/or the STB server is configured to lookup the video share ID in said database.

5. System according to any of the previous claims wherein the video stream server is configured to send a notification to the front-end server that the video stream being sent from the mobile device to said video stream server has begun streaming preparation by the video stream server.

6. System according to any of the previous claims wherein the front-end server is configured for continuously updating the mobile device with the status of the system and of the video being shared.

7. System according to any of the claims 2-6 wherein the STB server is configured for continuously updating the STB with the status of the system and of the video being shared.

8. System according to any of the previous claims wherein the STB server is a TV app server.

9. Method for the real-time sending of a video stream from a mobile device to a set-top-box STB connected with an IPTV server, said method comprising:
receiving a request for sharing a video stream from the mobile device by a front-end server serving the mobile device;
sending the video stream from the mobile device to a video stream server;
receiving a confirmation by the front-end server from the video stream server that the video stream being sent from the mobile device to said video stream server is ready to be streamed to the STB;
sending a notification to an IPTV server serving TV to the STB, that a request for sharing a video stream has been made, such that the IPTV server will display said notification through the STB and will give the STB user the choice to open an especially built URL for receiving the video stream being shared by the mobile device.

10. Method according to the previous claim comprising:
serving by an STB server, to the STB, the data of the notification that a request for sharing a video stream has been made, when the STB user has choosen to open said especially built URL;
receiving by the STB server, that confirmation from a user of the STB that the video stream has been accepted;
notifying, by the STB server, the front-end server that the video stream has been accepted;
serving, to the STB, the address of the video stream at the video stream server;
streaming the video stream from the video stream server to the STB.

11. Method according to any of the claims 9 - 10 comprising:
authenticating by an authentication server the users of the system and
correlating by the authentication server each user with each STB;
wherein the front-end server requests from the authentication server the identification of the STB correlated with the destination user being sought for the sending of a video stream.

12. Method according to any of the claims 9 - 11 comprising:
storing in a database the IDs of the video streams to be shared;
wherein the front-end server creates a video share ID for each request received from a mobile device and stores said video share ID in the database;
wherein the front-end server and/or the STB server look up the video share ID in said database when required.

13. Method according to any of the claims 9 - 12 wherein the video stream server sends a notification to the front-end server when the video stream being sent from the mobile device to said video stream server has begun streaming preparation by the video stream server.

14. Method according to any of the claims 9 - 13 comprises continuously updating the mobile device by the front-end server with the status of the system and of the video being shared.

15. Method according to any of the claims 10 - 14 comprises continuously updating the STB by the STB server with the status of the system and of the video being shared.

## Patentansprüche

1. System zur Echtzeit-Übertragung eines Videostreams von einer mobilen Vorrichtung an eine Set-Top-Box (STB), die mit einem IPTV-Server verbunden ist, wobei das genannte System Folgendes umfasst:
einen IPTV-Server zur Bereitstellung von TV an die STB, die mit dem genannten IPTV-Server verbunden ist;
einen Front-End-Server zur Bereitstellung an die mobile Vorrichtung;
einen Videostream-Server zur Echtzeit-Bereitstellung des Videostreams an die STB;
wobei der Front-End-Server eingerichtet ist, um:
eine Anforderung zur Freigabe eines Videostreams von der mobilen Vorrichtung zu empfangen;
eine Bestätigung von dem Videostream-Server zu empfangen, dass der Videostream, der von der mobilen Vorrichtung an den genannten Videostream-Server übertragen wird, bereit zum Streaming an die STB ist;
eine Benachrichtigung an den IPTV-Server zu übertragen, dass eine Anforderung zur Freigabe eines Videostreams gesendet wurde, sodass der IPTV-Server die genannte Benachrichtigung über die STB anzeigt und dem STB-Benutzer die Option zur Verfügung stellt, eine speziell zum Empfangen des durch die mobile Vorrichtung freigegebenen Videostreams erstellte URL zu öffnen.

2. System nach dem vorhergehenden Anspruch, umfassend:
einen STB-Server zur Bereitstellung an die STB;
wobei der STB-Server eingerichtet ist, um:
der STB Daten der Benachrichtigung bereitzustellen, dass eine Anforderung zur Freigabe eines Videostreams gesendet wurde, wenn der STB-Benutzer wählt, die genannte speziell erstellte URL zu öffnen;
eine Bestätigung von einem Benutzer der STB zu empfangen, dass der Videostream zugelassen wurde;
den Front-End-Server zu benachrichtigen, dass der Videostream zugelassen wurde;
der STB die Adresse des Videostreams am Videostream-Server bereitzustellen.

3. System nach einem vorhergehenden Anspruch, umfassend:
einen Authentifizierungsserver zur Authentifizierung von Benutzern des Systems und zur Korrelierung jedes Benutzers mit jeder STB;
wobei der Front-End-Server eingerichtet ist, um die Identifizierung der STB, die mit dem Zielbenutzer korreliert ist, bei dem die Übertragung eines Videostreams angefragt wurde, von dem Authentifizierungsserver anzufordern.

4. System nach einem vorhergehenden Anspruch, umfassend:
eine Datenbank zum Speichern der IDs der freizugebenden Videostreams;
wobei der Front-End-Server eingerichtet ist, um eine Videofreigabe-ID für jede von einer mobilen Vorrichtung empfangene Anforderung zu erstellen und um die genannte Videofreigabe-ID in der Datenbank zu speichern;
wobei der Front-End-Server und/oder der STB-Server eingerichtet ist/sind, um die Videofreigabe-ID in der genannten Datenbank zu suchen.

5. System nach einem vorhergehenden Anspruch, wobei der Videostream-Server eingerichtet ist, um eine Benachrichtigung an den Front-End-Server zu übertragen, dass der von der mobilen Vorrichtung an den genannten Videostream-Server übertragene Videostream die Streaming-Vorbereitung durch den Videostream-Server begonnen hat.

6. System nach einem vorhergehenden Anspruch, wobei der Front-End-Server eingerichtet ist, um die mobile Vorrichtung kontinuierlich mit dem Status des Systems und des freigegebenen Videos zu aktualisieren.

7. System nach einem der Ansprüche 2-6, wobei der STB-Server eingerichtet ist, um die STB kontinuierlich mit dem Status des Systems und des freigegebenen Videos zu aktualisieren.

8. System nach einem vorhergehenden Anspruch, wobei es sich bei dem STB-Server um einen TV-App-Server handelt.

9. Verfahren zur Echtzeit-Übertragung eines Videostreams von einer mobilen Vorrichtung an eine Set-Top-Box (STB), die mit einem IPTV-Server verbunden ist, wobei das genannte Verfahren Folgendes umfasst:
Empfangen einer Anforderung zur Freigabe eines Videostreams von der mobilen Vorrichtung durch einen an die mobile Vorrichtung bereitstellenden Front-End-Server;
Übertragen des Videostreams von der mobilen Vorrichtung an einen Videostream-Server;
Empfangen einer Bestätigung von dem Videostream-Server durch den Front-End-Server, dass der Videostream, der von der mobilen Vorrichtung an den genannten Videostream-Server übertragen wird, bereit zum Streaming an die STB ist;
Übertragen einer Benachrichtigung an einen der STB TV bereitstellenden IPTV-Server, dass eine Anforderung zur Freigabe eines Videostreams gesendet wurde, sodass der IPTV-Server die genannte Benachrichtigung über die STB anzeigt und dem STB-Benutzer die Option zur Verfügung stellt, eine speziell zum Empfangen des durch die mobile Vorrichtung freigegebenen Videostreams erstellte URL zu öffnen.

10. Verfahren nach dem vorhergehenden Anspruch, umfassend:
Bereitstellen, durch einen STB-Server, von Daten der Benachrichtigung an die STB, dass eine Anforderung zur Freigabe eines Videostreams gesendet wurde, wenn der STB-Benutzer gewählt hat, die genannte speziell erstellte URL zu öffnen;
Empfangen, durch den STB-Server, der Bestätigung von einem Benutzer der STB, dass ein Videostream zugelassen wurde;
Benachrichtigen, durch den STB-Server, des Front-End-Servers, dass der Videostream zugelassen wurde;
Bereitstellen der Adresse des Videostreams an die STB am Videostream-Server; Streamen des Videostreams von dem Videostream-Server an die STB.

11. Verfahren nach einem der Ansprüche 9-10, umfassend:
Authentifizieren, durch einen Authentifizierungsserver, der Benutzer des Systems und Korrelieren, durch den Authentifizierungsserver, jedes Benutzers mit jeder STB;
wobei der Front-End-Server die Identifizierung der STB, die mit dem Zielbenutzer korreliert ist, bei dem die Übertragung eines Videostreams angefragt wurde, von dem Authentifizierungsserver anfordert.

12. Verfahren nach einem der Ansprüche 9-11, umfassend:
Speichern der IDs der freizugebenden Videostreams in einer Datenbank;
wobei der Front-End-Server eine Videofreigabe-ID für jede von einer mobilen Vorrichtung empfangene Anforderung erstellt und die genannte Videofreigabe-ID in der Datenbank speichert;
wobei der Front-End-Server und/oder der STB-Server die Videofreigabe-ID in der genannten Datenbank sucht/suchen.

13. Verfahren nach einem der Ansprüche 9-12, wobei der Videostream-Server eine Benachrichtigung an den Front-End-Server überträgt, wenn der von der mobilen Vorrichtung an den genannten Videostream-Server übertragene Videostream die Streaming-Vorbereitung durch den Videostream-Server begonnen hat.

14. Verfahren nach einem der Ansprüche 9-13, umfassend die kontinuierliche Aktualisierung der mobilen Vorrichtung durch den Front-End-Server mit dem Status des Systems und des freigegebenen Videos.

15. Verfahren nach einem der Ansprüche 10-14, umfassend die kontinuierliche Aktualisierung der STB durch den STB-Server mit dem Status des Systems und des freigegebenen Videos.

## Revendications

1. Un système d'envoi en temps réel d'un flux vidéo d'un dispositif mobile à un boîtier décodeur STB raccordé à un serveur IPTV, ledit système comprenant :
un serveur IPTV destiné à la desserte de télévision au STB qui est raccordé audit serveur IPTV,
un serveur frontal destiné à la desserte du dispositif mobile,
un serveur de flux vidéo destiné à la desserte en temps réel du flux vidéo au STB,
où le serveur frontal est configuré de façon à :
recevoir une demande de partage d'un flux vidéo à partir du dispositif mobile,
recevoir une confirmation à partir du serveur de flux vidéo que le flux vidéo qui est envoyé du dispositif mobile audit serveur de flux vidéo est prêt à être diffusé en continu au STB,
envoyer une notification au serveur IPTV indiquant qu'une demande de partage d'un flux vidéo a été effectuée, de sorte que le serveur IPTV affichera ladite notification par l'intermédiaire du STB et donnera à l'utilisateur du STB le choix d'ouvrir une URL spécialement conçue destinée à la réception du flux vidéo qui est partagé par le dispositif mobile.

2. Le système selon la Revendication précédente comprenant :
un serveur de STB destiné à la desserte du STB,
où le serveur de STB est configuré de façon à :
desservir, au STB, des données relatives à la notification qu'une demande de partage d'un flux vidéo a été effectuée lorsque l'utilisateur du STB choisit d'ouvrir ladite URL spécialement conçue,
recevoir une confirmation à partir d'un utilisateur du STB que le flux vidéo a été accepté,
notifier le serveur frontal que le flux vidéo a été accepté,
desservir, au STB, l'adresse du flux vidéo au niveau du serveur de flux vidéo.

3. Le système selon l'une quelconque des Revendications précédentes comprenant :
un serveur d'authentification destiné à l'authentification des utilisateurs du système et à la corrélation de chaque utilisateur avec chaque STB,
où le serveur frontal est configuré de façon à demander au serveur d'authentification l'identification du STB corrélé avec l'utilisateur de destination qui est recherché en vue de l'envoi d'un flux vidéo.

4. Le système selon l'une quelconque des Revendications précédentes comprenant :
une base de données destinée à la conservation en mémoire des identifiants des flux vidéos à partager,
où le serveur frontal est configuré de façon à créer un identifiant de partage de vidéo pour chaque demande reçue d'un dispositif mobile et à conserver en mémoire ledit identifiant de partage de vidéo dans la base de données,
où le serveur frontal et/ou le serveur de STB est configuré de façon à consulter l'identifiant de partage de vidéo dans ladite base de données.

5. Le système selon l'une quelconque des Revendications précédentes où le serveur de flux vidéo est configuré de façon à envoyer une notification au serveur frontal indiquant que le flux vidéo qui est envoyé du dispositif mobile audit serveur de flux vidéo a commencé la préparation de diffusion en continu par le serveur de flux vidéo.

6. Le système selon l'une quelconque des Revendications précédentes où le serveur frontal est configuré de façon à actualiser en continu le dispositif mobile avec l'état du système et de la vidéo qui est partagée.

7. Le système selon l'une quelconque des Revendications 2 à 6 où le serveur de STB est configuré de façon à actualiser en continu le STB avec l'état du système et de la vidéo qui est partagée.

8. Le système selon l'une quelconque des Revendications précédentes où le serveur de STB est un serveur d'applications de télévision.

9. Un procédé d'envoi en temps réel d'un flux vidéo d'un dispositif mobile à un boîtier décodeur STB raccordé à un serveur IPTV, ledit procédé comprenant :
la réception d'une demande de partage d'un flux vidéo à partir du dispositif mobile par un serveur frontal desservant le dispositif mobile,
l'envoi du flux vidéo du dispositif mobile à un serveur de flux vidéo,
la réception d'une confirmation par le serveur frontal à partir du serveur de flux vidéo indiquant que le flux vidéo qui est envoyé du dispositif mobile audit serveur de flux vidéo est prêt à être diffusé en continu au STB,
l'envoi d'une notification à un serveur IPTV desservant de la télévision au STB indiquant qu'une demande de partage d'un flux vidéo a été effectuée, de sorte que le serveur IPTV affichera ladite notification par l'intermédiaire du STB et donnera à l'utilisateur du STB le choix d'ouvrir une URL spécialement conçue destinée à la réception du flux vidéo qui est partagé par le dispositif mobile.

10. Le procédé selon la Revendication précédente comprenant :
la desserte par un serveur de STB, au STB, des données relatives à la notification qu'une demande de partage d'un flux vidéo a été effectuée lorsque l'utilisateur du STB a choisi d'ouvrir ladite URL spécialement conçue,
la réception par le serveur de STB, d'une confirmation à partir d'un utilisateur du STB indiquant que le flux vidéo a été accepté,
la notification, par le serveur de STB, du serveur frontal que le flux vidéo a été accepté,
la desserte, au STB, de l'adresse du flux vidéo au niveau du serveur de flux vidéo,
la diffusion en continu du flux vidéo du serveur de flux vidéo au STB.

11. Le procédé selon l'une quelconque des Revendications 9 ou 10 comprenant :
l'authentification par un serveur d'authentification des utilisateurs du système et la corrélation par le serveur d'authentification de chaque utilisateur avec chaque STB,
où le serveur frontal demande au serveur d'authentification l'identification du STB corrélé avec l'utilisateur de destination qui est recherché en vue de l'envoi d'un flux vidéo.

12. Le procédé selon l'une quelconque des Revendications 9 à 11 comprenant :
la conservation en mémoire dans une base de données des identifiants des flux vidéos à partager,
où le serveur frontal crée un identifiant de partage de vidéo pour chaque demande reçue d'un dispositif mobile et conserve en mémoire ledit identifiant de partage de vidéo dans la base de données,
où le serveur frontal et/ou le serveur de STB consultent l'identifiant de partage de vidéo dans ladite base de données si nécessaire.

13. Le procédé selon l'une quelconque des Revendications 9 à 12 où le serveur de flux vidéo envoie une notification au serveur frontal lorsque le flux vidéo qui est envoyé du dispositif mobile audit serveur de flux vidéo a commencé la préparation de diffusion en continu par le serveur de flux vidéo.

14. Le procédé selon l'une quelconque des Revendications 9 à 13 comprend l'actualisation en continu du dispositif mobile par le serveur frontal avec l'état du système et de la vidéo qui est partagée.

15. Le procédé selon l'une quelconque des Revendications 10 à 14 comprend l'actualisation en continu du STB par le serveur de STB avec l'état du système et de la vidéo qui est partagée.
